# EUROPÄISCHE PATENTSCHRIFT

(11) **EP 1 226 060 B1**
(45) Veröffentlichungstag und Bekanntmachung des Hinweises auf die Patenterteilung: **27.10.2004**
(21) Anmeldenummer: 01955119.1
(22) Anmeldetag: 10.08.2001
(51) Int. Cl.: B61K 3/00, F16N 29/02

(54) **VERFAHREN ZUR STEUERUNG DER ABGABE VON SCHMIERMITTEL**
METHOD FOR CONTROLLING THE DELIVERY OF LUBRICANT
PROCEDE POUR COMMANDER LA DISTRIBUTION DE LUBRIFIANT

(30) Priorität: 11.08.2000 AT 13942000
(43) Veröffentlichungstag der Anmeldung: 31.07.2002
(73) Patentinhaber: Hy-Power Flexomatic Hydraulik Handelsges. m.b.H., 3013 Tullnerbach (AT)
(72) Erfinder: GUNACKER, Christian, A-1060 Wien (AT); GUNACKER, Richard, A-3072 Kasten (AT)
(74) Vertreter: Casati, Wilhelm, Dipl.-Ing.
(86) Internationale Anmeldenummer: PCT/AT2001/000266
(87) Internationale Veröffentlichungsnummer: WO 2002/014134

(56) Entgegenhaltungen:
- EP-A- 0 787 638
- AT-B- 400 427
- DE-A- 2 617 993

## Beschreibung

Die Erfindung bezieht sich auf ein Verfahren zur Steuerung der Abgabe von Schmiermittel zwischen zwei gegeneinander bewegbaren Teilen, insbesondere zum Schmieren von Schienen, vor allem in Gleisbögen, um Quietschgeräusche zu vermeiden bzw. zu vermindern, wobei wenigstens ein Sensor zur Aufnahme von Schallschwingungen, insbesondere Körperschallschwingungen, z.B. ein Mikrophon, vorgesehen ist, dessen Signal einem Selektivverstärker, z.B. einem aktiven Bandpaßfilter, zugeführt und als Steuergröße zum Auslösen der Schmiermittelabgabe eingesetzt wird.

Bei einer bekannten Einrichtung, wie z.B. in der AT-B-400427, mit welcher dieses Verfahren ausgeübt werden kann und welches für die Schmierung von Schienen für Gleisfahrzeuge bestimmt ist, wird der an den Schienen entstehende Körperschall gemessen, wobei bei Erreichen eines bestimmten Pegels jenes Frequenzbereiches, in dem auch ein Quietschton vorwiegend liegt, eine Schmiermittelabgabe ausgelöst wird. Eine derartige Vorgehensweise hat den Vorteil, daß nur bei Bedarf geschmiert wird, und damit eine Überschmierung ebenfalls verhindert wird, wobei insbesondere bei Gleisschmierungen ein Überschmieren deshalb vermieden werden muß, weil sonst die Gefahr bestehen könnte, daß die Laufflächen der Schienenräder ebenfalls mitgeschmiert werden, was zu einer erheblichen Verschlechterung der Bremswirkung führen würde.

Diese bekannte Anlage und das Verfahren zum Betrieb derselben hat jedoch den Nachteil, daß die Sensorempfindlichkeit, also die Mikrophonempfindlichkeit, nicht allzu weitreichend eingestellt sein kann, weil sonst aufgrund der Abnahme des Schallpegels durch die Entfernung vom Ort des Entstehens des Quietschgeräusches entweder die Einrichtung so empfindlich eingestellt sein muß, daß eigentlich bei jedem Überfahren der Meßstelle ein Schmierimpuls ausgelöst wird oder aber, wenn die Einstellung weniger empfindlich gewählt wird, bei von der Meßstelle weiter entfernt auftretenden Quietschgeräuschen eine Schmierung nicht ausgelöst wird.

Der Erfindung liegt daher die Aufgabe zugrunde, ein Verfahren der eingangs genannten Art zu schaffen, mit welchem die Auslösung des Schmierimpulses selektiver einstellbar ist, wodurch auch von der Schienenschmierung abweichende Einsatzgebiete ermöglicht sein sollen.

Erfindungsgemäß wird diese Aufgabe dadurch gelöst, daß wenigstens zwei Frequenzbänder herausgefiltert, die Stärke der Schallschwingungen der gefilterten Frequenzbänder miteinander verglichen und die ermittelte Differenz bzw. das Verhältnis der ermittelten Werte zueinander als Steuergröße eingesetzt wird. Dadurch wird erreicht, daß keine Absolutwerte gemessen werden, die sich z.B. in Abhängigkeit von der Entfernung zwischen Auftreten des Geräusches und Ort der Abnahme der Schallschwingungen verändern können, sondern es wird eine bestimmteDifferenz bzw. eine bestimmte Relation zwischen den Werten gemessen, die von den Absolutwerten unabhängig ist Es können damit auch auf längere Entfernungen Steuerimpulse abgenommen werden, die aufgrund der Relativwerte eine exakte Steuerung ermöglichen.

Weiters kann durch entsprechende Wahl der Frequenzbänder bzw. des "kritischen" Verhältnisses zwischen den beiden Frequenzen das Verfahren auch für die Überwachung unterschiedlichster Gegenstände, bei welchen zwei gegeneinander bewegbare, zu schmierende Teile vorhanden sind, verwendet werden.

Vorteilhafterweise kann als eines der Frequenzbänder das die Schallschwingungen des Rollgeräusches enthaltende Frequenzband und als zweites der Frequenzbänder eines die für ein Quietschen chakteristische Schallschwingungen enthaltende Frequenzband herausgefiltert und weiterbehandelt werden. Damit ist eine optimale Anpassung des Verfahrens an die Schmierung von Schienen bzw. der Radkränze von Schienenfahrzeugen erreichbar, wobei aufgrund des genauen Einstellbarkeit auch eine am entsprechenden Fahrzeug, z.B. einen Zugfahrzeug, angebrachte Einrichtung verwendet werden kann. Dabei kann der Schallpegel der Schallschwingungen im geschmierten Zustand als Bezugsgröße für die Ermittlung des Steuersignals herangezogen werden, welches durch das Verhältnis der Schallpegel der Schallschwingungen der gemessenen Frequenzbereiche zueinander ermittelt wird. Es wird damit ein den Idealzustand wiedergebender Schwellwert ermittelt, auf welchen aufbauend dann die Steuerung der Schmiermittelabgabe erfolgen kann.

Die Erfindung wird nachstehend anhand der Zeichnungen näher erläutert.

Fig. 1 zeigt in einem Diagramm den Kurvenverlauf der Schwingungen bei der Fahrt auf einem gefetteten Gleis (strichlierte Linie) und bei der Fahrt auf einem ungefetteten Gleit (durchgezogene Linie), bei welchem ein Quietscheffekt auftritt.

Fig. 2 zeigt schematisch den Steuerungsaufbau bezüglich der Abgabe von Schmiermittel gemäß dem erfindungsgemäßen Verfahren.

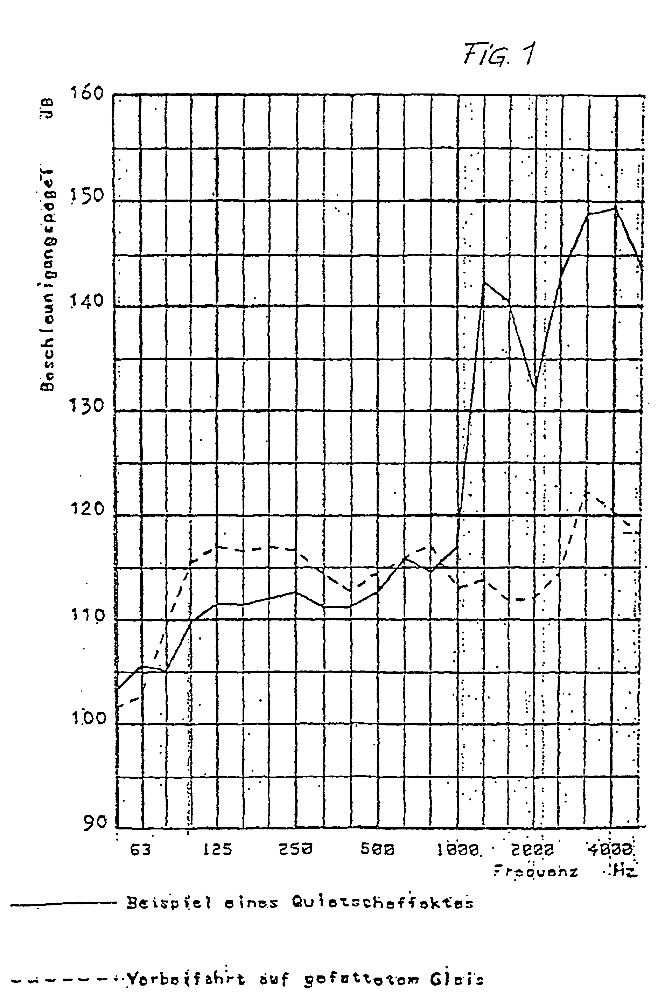

Wie aus Fig. 1 ersichtlich ist, bewegt sich der Schallpegel bei der Vorbeifahrt eines Zuges auf gefettetem Gleis in einem eher gleichmäßigen Band, wobei bei Frequenzen ab etwa 125 Hz bis über 4000 Hz die Schwankungen nur zwischen etwa 112 und 122 dB liegen.

Liegt hingegen ein Quietschgeräusch bzw. ein Quietscheffekt vor, so erfolgt ab etwa 1000 Hz ein sprunghafter Anstieg des Schallpegels, wobei im Bereich von 2000 Hz bei diesem Versuch eine Minderung des Schallpegels gelegen ist, um dann wieder stark anzusteigen, um bei 4000 Hz das Maximum zu erreichen. Es zeigt sich daraus, daß für das Rollgeräusch charakteristische Frequenzbänder im Bereich der niederen Frequenzen liegen, wobei Quietschgeräusche im höheren Frequenzbereich auftreten. Bevorzugte Meßbereiche sind daher die Frequenzbänder zwischen etwa 400 bis etwa 600 Hz für die Rollgeräusche, da - wie aus Fig. 1 ersichtlich ist - in diesem Bereich der Schallpegel sowohl bei gefettetem Gleis als auch bei nicht gefettetem Gleis, also bei quietschenden Rädern, etwa gleich ist. Als zweites Frequenzband wird man einen Bereich zwischen 1000 und 5000 Hz heranziehen, wobei im vorliegenden Fall als zweiter Meßbereich sich der Bereich zwischen 3000 und 4000 Hz anbietet, da dort ein relativ breiter Bereich mit etwa gleich hohem Schallpegel vorliegt.

Die konkrete Auswahl des der Messung zugrundeliegenden Frequenzbereiches kann in der Praxis noch von einer Reihe zusätzlicher Umstände abhängen, u.zw. z.B. davon, welche Art von sich gegeneinander bewegenden Gegenständen vorliegt, bzw. auch wie groß die Entfernung der Meßstelle von dem zu schmierenden Bereich ist. So wird beispielsweise ein Kettenförderer oder ein Rollenförderer eine andere Frequenzbandauswahl erfordern als ein auf Schienen geführtes Fahrzeug, wobei auch hinsichtlich der Schienenfahrzeuge Unterschiede in bezug auf die Art der darauf bewegten Fahrzeuge sowie deren Geschwindigkeit u.dgl. die Auswahl der der Messung zugrundeliegenden Frequenz beeinflussen wird. So weist ein schwer beladener Güterzug beispielsweise eine andere Rollgeräuschcharakteristik auf als ein Personenzug mit Waggons in Leichtbauweise.

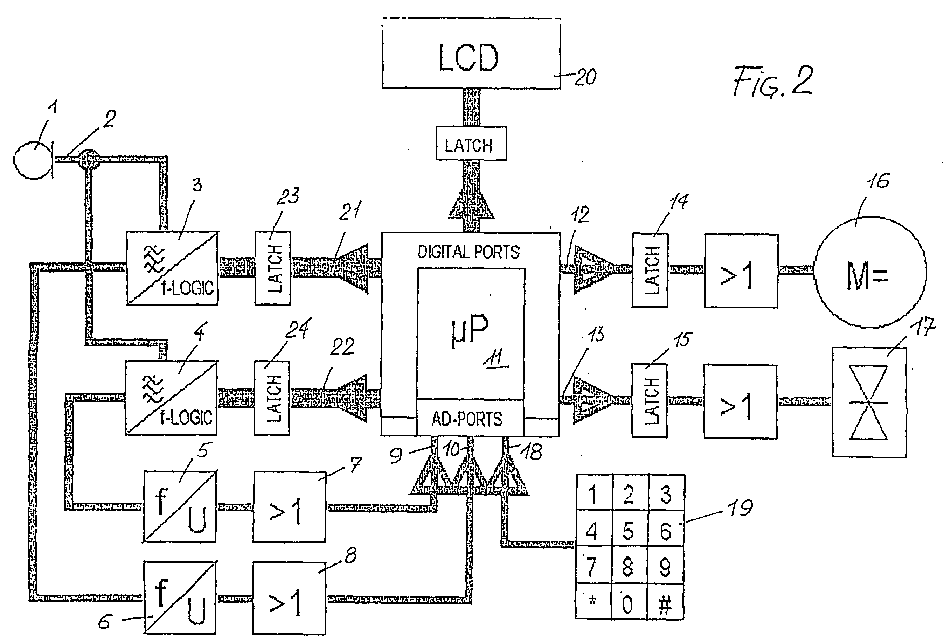

Die in Fig. 2 gezeigte Kontrolleinheit ist als Steuereinheit einer Schmieranlage gedacht, wie sie z.B. in AT 400 427 B geoffenbart ist . Die in Fig. 2 dargestellte Kontrolleinheit kann natürlich auch in gleicher Weise für andere Schmiereinrichtungen verwendet werden, z.B. für zentrale Schmierauslösungen an einem Rollengang oder aber selektiv bei Einzellagern, welche über gesonderte Sensoreinrichtungen überwacht und geschmiert werden sollen.

In Fig. 2 ist mit 1 eine Sensoreinheit, z.B. ein Körperschallmikrophon, bezeichnet, dessen Ausgang 2 mit zwei Bandpaßfiltern 3, 4 verbunden ist, welche ihrerseits dann mit je einer Einrichtung zur Ermittlung des Schallpegels 5, 6 verbunden sind. Die ermittelten Schallpegel werden über Analysatoren 7, 8 miteinander verglichen und über A/D-Eingänge 9, 10 einem Mikroprozessor 11 zugeführt. Die Ausgänge dieses Mikroprozessors 12, 13 sind über logische Einheiten 14, 15 mit einem Pumpenmotor 16 bzw. einem Ventil 17 verbunden, wobei die logischen Einheiten den Motor 16 bzw. das Ventil 17 in Abhängigkeit von den vom Mikroprozessor 11 übermittelten Schaltimpuls ein- bzw. ausschalten.

Der Mikroprozessor 11 weist noch einen weiteren A/D-Eingang 18 auf, über welchen mittels einer Eingabeeinheit 19 eine Steuerung bzw. Einstellung des Mikroprozessors 11 und der Frequenzbänder der Filter bzw. des Auslösepegels erfolgen kann. An den Mikroprozessor 11 ist eine Anzeigeeinheit 20 angeordnet, mittels welcher die über die Eingabeeinheit 19 getätigten Eingaben überwacht werden können. Weiters weist der Mikroprozessor 11 noch zwei Ausgänge 21, 22 auf, die über Justiereinheiten 23, 24 zur Einstellung der ausgewählten Frequenzbänder der Bandpaßfilter 3, 4 dienen.

Für den Betrieb der Schmiereinheit über die in Fig. 2 wiedergegebene Kontrolleinheit wird zunächst die gesamte Einrichtung dadurch kalibriert, daß jene Bewegung, auf welche die Kontrolleinheit ansprechen soll, in geschmiertem Zustand erfaßt wird, d.h. daß der bei ordnungsgemäß geschmierten Gleitflächen auftretende Geräuschpegel erfaßt wird. Aufgrund dieses erfaßten Geräuschpegels wird dann ein Verhältnis zwischen den beiden gemessenen Frequenzbändern, z.B. eines Frequenzbandes, von 400 - 600 Hz einerseits und eines Frequenzbandes von etwa 3000 bis 4000 Hz anderseits ausgewählt und als Regelgröße in die Mikroprozessorsteuereinheit eingegeben. Übersteigt das Verhältnis zwischen den beiden eingestellten Frequenzbändern den vorgegebenen Verhältniswert, dann wird ein Schmier- impuls ausgelöst.

Wie schon in AT 400 427 B ausgeführt, erfolgt dieser Schmierimpuls über ein nicht dargestelltes Zeitschaltglied, wobei über dieses Zeitschaltglied auch eine Verweilzeit der Anlage eingestellt werden kann, also eine Zeit, innerhalb welcher diese Anlage auf Quietschgeräusche bzw. Überschreiten der Pegel nicht anspricht, um z.B. bei Schienen- schmierung dem Zug die Möglichkeit zu geben, auf den Radkränzen mitgenommenes Schmiermittel durch die Kurve zu verteilen.

Das erfindungsgemäße Verfahren kann z.B. bei Schienenfahrzeugen auch dann vorteilhaft angewendet werden, wenn die Schmiereinrichtung nicht stationär auf der Schiene, sondern an einem der auf den Schienen rollenden Fahrzeugen angebracht ist, wobei auf diesem Fahrzeug die Aufgabe des Schmiermittels direkt am Radkranz erfolgen kann, u.zw. in einer Menge, die gerade zur Vermeidung der Quietschgeräusche ausreicht. Ein zu viel an Schmiermittel auf der Schiene würde, wie schon angeführt, z.B. bei Schienenfahrzeugen dazu führen, daß vor allem bei einer Notbremsung die gesamten, auf der Schiene rollenden Fahrzeuge ins Gleiten kommen und damit der Bremsweg erheblich verlängert werden würde.

Es könnte auch in nicht dargestellter Weise die aufgrund der Entfernung zwischen Tonabnahme und Auftreten des Quietschgeräusches sich verändernde Toncharakteristik dazu herangezogen werden, daß selektiv, z.B in einer Rollenbahn, einzelne Lager geschmiert werden.

## Patentansprüche

1. Verfahren zur Steuerung der Abgabe von Schmiermittel zwischen zwei gegeneinander bewegbaren Teilen, insbesondere zum Schmieren von Schienen, vor allem in Gleisbögen, um Quietschgeräusche zu vermeiden bzw. zu vermindern, wobei wenigstens ein Sensor zur Aufnahme von Schallschwingungen, insbesondere Körperschallschwingungen, z.B. ein Mikrophon, vorgesehen ist, dessen Signal einem Selektivverstärker, z.B. einem aktiven Bandpaßfilter, zugeführt und als Steuergröße zum Auslösen der Schmiermittelabgabe eingesetzt wird, **dadurch gekennzeichnet, daß** wenigstens zwei Frequenzbänder herausgefiltert, die Stärke der Schallschwingungen der gefilterten Frequenzbänder miteinander verglichen und die ermittelte Differenz bzw. das Verhältnis der ermittelten Werte zueinander als Steuergröße eingesetzt wird.

2. Verfahren nach Anspruch 1, **dadurch gekennzeichnet, daß** als eines der Frequenzbänder das die Schallschwingungen des Rollgeräusches enthaltende Frequenzband und als zweites der Frequenzbänder eines die für ein Quietschen chakteristische Schallschwingungen enthaltende Frequenzband herausgefiltert und weiterbehandelt werden.

3. Verfahren nach Anspruch 2, **dadurch gekennzeichnet, daß** der Schallpegel der Schallschwingungen im geschmierten Zustand als Bezugsgröße für die Ermittlung des Steuersignals herangezogen wird, welches durch das Verhältnis der Schallpegel der Schallschwingungen der gemessenen Frequenzbereiche zueinander ermittelt wird.

## Claims

1. A method of controlling the delivery of lubricant between two mutually movable components, particularly for lubricating rails, particularly in bends in a track, in order to prevent or reduce squeaking noises, whereby at last one sensor is provided for receiving acoustic vibrations, particularly acoustic vibrations conducted through solid materials, e.g. a microphone, the signal from which is supplied to a selective amplifier, e.g. an active band pass filter, and is used as a control parameter for initiating the delivery of lubricant, **characterised in that** at least two frequency bands are filtered out, the intensity of the acoustic vibrations of the filtered frequency bands are compared with one another and the difference which is determined or the ratio of the determined values to one another is used as the control parameter , said two frequency bands being subsequent treated.

2. A method as claimed in Claim 1, **characterised in that** the frequency band including the acoustic vibrations of the rolling noise is filtered out and used as one of the frequency bands and a frequency band including the acoustic vibrations characteristic of a squeaking noise is filtered out and used as the second of the frequency bands.

3. A method as claimed in Claim 2, **characterised in that** the sound level of the acoustic vibrations in the lubricated state is used as a reference parameter for the determination of the control signal, which is determined by the ratio of the sound levels of the acoustic vibrations of the measured frequency ranges.

## Revendications

1. Procédé de commande de la distribution d'un lubrifiant entre deux pièces mobiles l'un par rapport à l'autre, notamment pour la lubrification de rails surtout au niveau d'arcs de cercles, afin d'éviter ou de réduire les bruits de grincements, au moins un capteur étant prévu pour la détection de vibrations sonores, notamment des vibrations sonores dans la structure, par exemple un microphone, dont le signal est amené à un amplificateur sélectif, par exemple un filtre passe-bas actif et utilisé comme grandeur de contrôle pour le déclenchement de la distribution du lubrifiant, **caractérisé en ce qu'**au moins deux bandes de fréquences sont filtrées, les intensités des vibrations sonores des bandes de fréquences filtrées sont comparées entre elles et la différence déterminée ou le rapport entre les valeurs déterminées est utilisé comme grandeur de contrôle.

2. Procédé selon la revendication 1, **caractérisé en ce que**, en tant qu'une des bandes de fréquences, la bande de fréquences contenant les vibrations sonores du bruit de roulement et en tant que deuxième bande de fréquences, une bande de fréquences contenant les vibrations sonores caractéristiques d'un grincement, sont filtrées et traitées.

3. Procédé selon la revendication 2, **caractérisé en ce que** le niveau de bruit des vibrations sonores dans l'état lubrifié est utilisé comme grandeur de référence pour la détermination du signal de commande qui est déterminé par le rapport entre les niveaux de bruit des vibrations sonores des domaines de fréquences mesurés.
